# EUROPÄISCHE PATENTSCHRIFT

(11) **EP 1 183 847 B1**
(45) Veröffentlichungstag und Bekanntmachung des Hinweises auf die Patenterteilung: **14.04.2004**
(21) Anmeldenummer: 00943717.9
(22) Anmeldetag: 15.05.2000
(51) Int. Cl.: H04L 29/06, H04Q 7/38, G07F 7/10

(54) **VERFAHREN ZUR GESICHERTEN ÜBERMITTLUNG VON GESCHÜTZTEN DATEN**
METHOD FOR SECURELY TRANSMITTING PROTECTED DATA
PROCEDE DE TRANSMISSION SECURISEE DE DONNEES PROTEGEES

(30) Priorität: 20.05.1999 DE 19923174
(43) Veröffentlichungstag der Anmeldung: 06.03.2002
(73) Patentinhaber: Smarttrust Systems Oy, 00510 Helsinki (FI)
(72) Erfinder: REIF, Holger, D-99069 Erfurt (DE); HENKEL, Thomas, D-99510 Appolda (DE)
(74) Vertreter: Engel, Christoph Klaus
(86) Internationale Anmeldenummer: PCT/EP2000/004351
(87) Internationale Veröffentlichungsnummer: WO 2000/072544

(56) Entgegenhaltungen:
- EP-A- 0 872 990
- WO-A-00/55820
- WO-A-99/05814
- DE-A- 19 645 006
- NYSTRÖM M: "A Cryptographic-Token Information Format Standard" USENIX WORKSHOP ON SMARTCARD TECHNOLOY, 10. - 11. Mai 1999, Seiten 1-8, XP002163754 Chicago, Illinois, USA
- HEINS K ET AL: "CHIPKARTEN SICHERN TRANSAKTIONEN UEBERS INTERNET. AUSGEKLUEGELTE SICHERHEITSMECHANISMEN SCHUETZEN VOR MANIPULATIONEN" ELEKTRONIK,DE,FRANZIS VERLAG GMBH. MUNCHEN, Bd. 47, Nr. 12, 9. Juni 1998 (1998-06-09), Seiten 74-79, XP000847911 ISSN: 0013-5658

## Beschreibung

Die vorliegende Erfindung betrifft ein Verfahren zur gesicherten Übermittlung von geschützten Daten von einem ersten Endgerät innerhalb eines ersten Sicherheitsbereichs zu einem zweiten Endgerät innerhalb eines zweiten Sicherheitsbereichs, der von dem ersten Sicherheitsbereich verschieden ist.

Auf dem Gebiet der Datenverarbeitung und -übertragung wächst der Bedarf zur Sicherung bzw. zum Schutz verschiedenster Daten stetig. Dadurch, daß immer mehr Menschen auf elektronische Daten Zugriff haben, besteht ein erhebliches Bedürfnis, sensible Daten vor unberechtigtem Zugriff zu schützen und innerhalb definierter Sicherheitsbereiche geheim zu halten oder deren Authentizität sicherzustellen. Im Stand der Technik existieren eine Vielzahl von Sicherheitsanwendungen, die entweder nicht standardisiert sind, oder auf unterschiedlichen Standards, Sicherheitsmodellen oder Technologien beruhen.

Die Gesamtheit solcher Sicherheitsmodelle oder -technologien können allgemein als Sicherheitsmerkmale aufgefaßt werden, wobei die einzelnen Merkmale das jeweils verwendete System bzw. Modell repräsentieren. Solche Sicherheitsmerkmale können beispielsweise kryptographische Sicherungssysteme und Datenformate, wie die digitale Signatur, Paßworte oder eine Verbindung aus PINs (Persönliche Identifikationsnummern) und TANs (Transaktionsnummern) sein.

Probleme mit bekannten Sicherheitssystemen für die Datenübertragung treten immer dann auf, wenn verschiedene Sicherheitsbereiche miteinander gekoppelt werden sollen, um einen Datenaustausch zwischen diesen Bereichen zu ermöglichen. Aufgrund der unterschiedlichen Sicherheitsmerkmale, die in verschiedenen Sicherheitsbereichen zur Anwendung kommen, ist eine direkte Kopplung unterschiedlicher Sicherheitsbereiche im allgemeinen unmöglich. Die unterschiedlichen Sicherheitsmerkmale können bislang nicht ineinander überführt werden. Wenn beispielsweise zum Schutz von Daten die in Deutschland bereits gesetzlich geregelte digitale Signatur eingesetzt wird, enthalten die geschützten Daten eine Code, der mit Hilfe eines asymmetrischen kryptografischen Verfahrens unter Benutzung eines persönlichen Schlüssels, der nur dem Absender dieser Daten bekannt ist, erzeugt wird. Innerhalb ein und desselben Sicherheitsbereichs ist es für einen Empfänger der geschützten Daten mit Hilfe eines öffentlichen Schlüssels des Absenders ohne weiteres möglich, die Integrität der Daten und die Identität des Absenders zu verifizieren. Ein Ermitteln des persönlichen Schlüssels ist dabei ausgeschlossen. Werden die Daten in einen anderen Sicherheitsbereich überführt und macht sich dabei z.B. eine Formatänderung erforderlich, sit die ursprüngliche Signatur wertlos. Sie kann auch nicht erneut vom Empfänger erzeugt werden, da ihm der hierzu notwendige persönliche Schlüssel des ursprünglichen Absenders fehlt.

Weitere Schwierigkeiten resultieren aus dem Bedarf, bestehende Sicherheitsbereiche auf neue Endgeräte auszuweiten, die die notwendigen besonderen Funktionalitäten nicht aufweisen oder aufgrund der verwendeten Übertragungsmedien und -geräte bestimmte komplexe Sicherheitsfunktionen nicht ausführen können. Derartige Probleme treten beispielsweise auf, wenn mobile Endgeräte, wie GSM-Telefone (Funktelefone zur Anwendung in einem globalen Mobilkommunikationssystem), in einem entsprechenden Sicherheitsbereich zu Anwendung kommen sollen.

Aus der internationalen Patentanmeldung mit der Veröffentlichungsnummer WO 99/01848 ist bekannt, daß in ein Funktelefon, welches in einem GSM-Netzwerk betrieben wird, eine sogenannte SIM-Karte integriert ist (SIM = Subscriber Identity Module = Teilnehmeridentifikationsmodul). In eine solche SIM-Karte läßt sich ein System zu Erzeugung einer digitalen Signatur implementieren, so daß es möglich wird, eine sichere Verbindung zwischen dem Funktelefon als erstem Endgerät und einem zweiten Endgerät innerhalb des GSM-Netzwerkes aufzubauen. Aufgrund der gegebenen Leistungsfähigkeit der Endgeräte und der begrenzten Integrationsfähigkeit von Systemen in die SIM-Karte ist ein solches Funktelefon auf spezielle Sicherheitsmerkmale beschränkt, die innerhalb dieses Sicherheitsbereichs zur Verfügung stehen. So ist es beispielsweise unmöglich, zusätzlich die notwendige Funktionalität zu integrieren, die die Teilnahme eines Funktelefons an einem Sicherheitsbereich ermöglicht, welcher die Anforderungen des HBCI-Standards erfüllt (HBCI - Home Banking Computer Interface = Standard zum Zugriff auf Bankangebote durch private Anwender).

In der internationalen Patentanmeldung mit der Veröffentlichungsnummer WO 99/01990 ist ein Verfahren zum Aufbau einer sicheren Dienstverbindung in einem Nachrichtenübertragungssystem beschrieben. Dieses System umfaßt auch ein mobiles Funktelefon, welches über ein GSM-Netzwerk an einen Nachrichtenübertragungs-Server angeschlossen ist, diesem Server kommt die Aufgabe zu, die vom Funktelefon gesendeten verschlüsselten Daten zu entschlüsseln und über eine weitere Nachrichtenverbindung, beispielsweise das Internet, an ein zweites Endgerät, wie einen Personalcomputer zu übermitteln. Gemäß diesem Stand der Technik kann als Sicherheitsmerkmal nur die verschlüsselte Identifikation des Endgerätes benutzt werden. Dieser Stand der Technik bietet keine Möglichkeit, zwei Sicherheitsbereiche miteinander zu koppeln. Insbesondere ist das Zusammenwirken zweier verschiedener Telekommunikationsnetzwerke unter Einbeziehung eines separaten Nachrichtenübertragungsservers notwendig, um einen einzelnen Sicherheitsbereich zu definieren. Im Gegensatz dazu wäre die Kopplung zweier Sicherheitsbereiche wünschenswert, wobei innerhalb jedes einzelnen Sicherheitsbereichs eine Ende-zu-Ende Sicherheit benötigt wird.

Die US 5 471 532 zeigt ein Verfahren zur Wiederverschlüsselung von Kommunikationseinheiten. Dabei wird ein Kommunikationsschlüssel zwischen "roaming unit" und "first/second key unit" mit Hilfe einer zentralen Instanz "home key unit" etabliert.

Die JP 10-13 945 bezieht sich auf ein "roaming system", wobei insbesondere ein Austausch eines kryptographischen Schlüssels zwischen einem Netzwerk und einem Terminal abgesichert werden soll. Eine Umsetzung von Sicherheitsmerkmalen kann nicht erfolgen. Ein Teilnehmer aus einem Heimnetzwerk wird in einem fremden Netzwerk betrieben, wobei er sich aber physisch in diesem Fremdnetzwerk befindet.

Die DE 196 30 920 C 1 beschreibt ein Verfahren und ein System zur Teilnehmerauthentifikation. Eine Authentifikationseinrichtung wandelt dabei GSM-spezifische Authentisierungsparameter in Sicherheitsparameter um. Die Authentifikationseinrichtung ist jedoch nicht in beide Sicherheitsbereiche integriert, sondern nur Mitglied des Mobilfunknetzes. Das verwendete Schnittstellenprotokoll ermöglicht keine Transformation von Sicherheitsmerkmalen. Die eigenständige Prüfung und Umsetzung bzw. Neugenerierung von Sicherheitsmerkmalen ist nicht möglich.

Die EP 0 786 915 A2 beschreibt eine Identifizierungseinrichtung für ein mobiles Endgerät. Diese Einrichtung umfaßt von vornherein entsprechende Schaltungseinrichtungen, die an den Betrieb in verschiedenen Mobilfunknetzen angepaßt sind. Das Gerät und das Verfahren ermöglichen keine Datenübertragung zwischen Sicherheitsbereichen, die ihrem Wesen nach völlig voneinander verschieden sind. Die unterschiedlichen Mobilfunknetze stellen vielmehr gleichartige Sicherheitsbereiche dar, wobei die einzelnen Sicherheitsmerkmale eine direkte Entsprechung in dem anderen Mobilfunknetz finden.

Die WO 99/05814 beschreibt eine Schutzeinrichtung für E-Mail-Übertragungen, die mit gespeicherten Schlüsseln eine Verschlüsselung/Entschlüsselung vornehmen kann. Damit werden an sich gleichartige Sicherheitsbereiche voneinander getrennt, um die Sicherbeit der E-Mail-Kommunikation zu erhöhen. Die Schutzeinrichtung ist jedoch nicht zur Kopplung verschiedenartiger Sicherheitsbereiche geeignet.

Eine Aufgabe der vorliegenden Erfindung besteht somit darin, eine Kommunikation zwischen Endgeräten in verschiedenartigen Sicherheitsbereichen zu ermöglichen. Die Sicherheitsbereiche sollen sich nicht nur hinsichtlich des Formats der zu übertragenden Daten, sondern darüber hinaus durch die Art, die Anzahl, die Funktionsweise und ähnliche Eigenschaften der verwendeten Sicherheitsmerkmale unterscheiden können. Hinsichtlich einer zweckmäßigen Ausführungsform besteht eine besondere Aufgabe der vorliegenden Erfindung darin, mobile Endgeräte, die in gewöhnlichen Mobilfunknetzen betrieben werden, in komplexere Sicherheitssysteme (beispielsweise HBCI-Applikationen) einzubinden. Um bereits vorhandene Endgeräte weiterhin zu verwenden, soll dabei darauf verzichtet werden, die in den komplexeren Sicherheitsbereichen benötigten Sicherheitsmerkmale in das mobile Endgerät selbst zu implementieren. Der erfindungsgemäße Verzicht auf die zusätzliche Implementierung erweiterter Sicherheitsmerkmale ermöglicht es erstmals, verschiedenartige Sicherheitsbereiche miteinander zu verbinden, da einfache Sicherheitsbereiche teilweise aufgrund ihrer technischen Ausrüstung oder begrenzter Übertragungskapazitäten prinzipiell nicht in der Lage sind, die für komplexere Sicherheitsbereiche notwendigen Sicherheitsmerkmale zu erzeugen und zu verarbeiten.

Diese und weitere Aufgaben werden von einem Verfahren gemäß Anspruch 1 gelöst.

Das erfindungsgemäße Verfahren bietet den Vorteil, daß beliebige Sicherheitsbereiche miteinander gekoppelt werden können. Durch die Verwendung des Bereichstransformators ist es nicht erforderlich, daß die Endgeräte in den verschiedenen Sicherheitsbereichen zusätzliche Funktionen unterstützen müssen. Die einzelnen Endgeräte werden in ihrem bisherigen Sicherheitsbereich unverändert betrieben und müssen nicht notwendiger Weise Kenntnis von der Existenz des Bereichstransformator noch Kenntnis von den speziellen Sicherheitsmerkmalen eines anderen Sicherheitsbereichs haben. Sofern der Bereichstransformator als solches entsprechend abgesichert ist, kann eine indirekte Ende-zu-Ende Sicherheit zwischen zwei Endgeräten erreicht werden, die verschiedenen Sicherheitsbereichen angehören, wobei physisch zwei Verbindungen jeweils mit Ende-zu-Ende Sicherheit aufgebaut sind. Der Bereichstransformator kann (muß aber nicht) eine Stellvertreterfunktion für die Mitglieder des einen Sicherheitsbereichs im anderen Sicherheitsbereich übernehmen. Dabei wendet er im anderen Sicherheitsbereich Sicherheitsmerkmale an (und verwaltet z.B. geheime Informationen, die zu dieser Anwendung notwendig sind), die einem berechtigten Endgerät des entsprechenden Sicherheitsbereichs zugeordnet sind. Weiterhin enthalten die ersten Sicherheitsmerkmale mindestens ein Berechtigungsmerkmal, in welchem die Information über die Zugangsberechtigung des ersten Endgeräts zu anderen Sicherheitsbereichen abgelegt ist. Anhand dieses Berechtigungsmerkmals kann vom Bereichstransformator entschieden werden, ob die Sicherheitsmerkmale des ersten Endgeräts transformiert werden dürfen, um eine Datenverbindung in den zweiten Sicherheitsbereich aufzubauen. Beispielsweise kann dadurch der zweite Sicherheitsbereich nur für ausgewählte Endgeräte bzw. deren Benutzer aus dem ersten Sicherheitsbereich zugänglich gemacht werden. Außerdem werden im Schritt der Transformation zusätzliche Sicherheitsmerkmale vom Bereichstransformator generiert und zu den zweiten Sicherheitsmerkmalen hinzugefügt. Dies ist beispielsweise vorteilhaft, wenn im zweiten Sicherheitsbereich bestimmte Sicherheitsmerkmale erforderlich sind, die im ersten Sicherheitsbereich keine unmittelbare Entsprechung finden aber einzelnen oder allen Mitgliedern des ersten Sicherheitsbereichs a priori zugestanden werden sollen.

Für die Nachweisbarkeit der korrekten Transformation der geschützten Daten und zur Erfüllung eines erhöhten Sicherheitsbedürfnisses kann es zweckmäßig sein, wenn vom Bereichstransformator ein Protokoll der Durchführung einzelner Arbeitsschritte aufgezeichnet wird. Insbesondere können der Empfang von geschützten Daten aus dem ersten Sicherheitsbereich, die Transformation von geschützten Daten und die Übermittlung von geschützten Daten in den zweiten Sicherheitsbereich in dieses Protokoll eingetragen werden. Ebenso kann die Prüfung und/oder die Anbringung von Sicherheitsmerkmalen im Protokoll dokumentiert werden. Vorzugsweise kann eine parallele Protokollierung in einem Eingangsprotokoll und in einem Ausgangsprotokoll erfolgen, wobei eineindeutige Querverweise zwischen den Einträgen des Eingangsprotokoll und denjenigen des Ausgangsprotokolls erzeugt und gespeichert werden. Weiterhin können jedem Protokolleintrag kennzeichnende Protokollmerkmale, wie beispielsweise ein Zeitstempel hinzugefügt werden.

Eine besonders zu bevorzugende Ausführungsform des Verfahrens ist auf die Verwendung eines mobilen Datenübertragungsgeräts, insbesondere eines Funktelefons, als erstes Endgerät angepaßt. Dabei ist es zweckmäßig, wenn die ersten Sicherheitsmerkmale auch eine digitale Signatur umfassen, die in diesem Funktelefon zu den Nutzdaten hinzugefügt wird. Vorzugsweise geschieht dies unter Verwendung einer SIM-Karte, die das notwendige System zur sicheren Erzeugung der digitalen Signatur enthält. Eine weitere Möglichkeit ist die Erzeugung der digitalen Signatur mittels eines sogenannten WIM (WAP Identification Module), das im Rahmen des WAP Standards (Wireless Access Protocol) in zukünftigen Funktelefonen zum Einsatz gelangen kann. Über das WAP soll der Zugang zum Internet über einen Minibrowser ermöglicht werden, der z.B. in ein Funktelefon integriert ist. Bei abgewandelten Ausführungsformen kann die Kommunikationsverbindung z.B. auch durch Infrarotwellen-Übertragung aufgebaut werden, insbesondere wenn kleinere Strecken durch drahtlose Verbindung überbrückt werden sollen.

Wenn bei einer zweckmäßigen Ausführungsform die zweiten Sicherheitsmerkmale an den HBCI-Standard angepaßt sind, so daß der zweite Sicherheitsbereich ein HBCI-System darstellt, kann durch die Verwendung des erfindungsgemäßen Verfahrens, ein Funktelefon beispielsweise zur Vornahme von Banktransaktionen eingesetzt werden, wobei die hohen Sicherheitsanforderungen nach dem HBCI-Standard erfüllt werden und die anderen Vorteile dieses Standards ausgenutzt werden können.

Weitere Vorteile, Einzelheiten und Weiterbildungen der vorliegenden Erfindung ergeben sich aus der nachfolgenden Beschreibung bevorzugter Ausführungsformen, unter Bezugnahme auf die Zeichnung. Es zeigen:
- Fig. 1: ein Blockschaltbild einer Datenübertragungsverbindung zwischen einem ersten Endgerät und einem zweiten Endgerät nach dem Stand der Technik;
- Fig. 2: ein Blockschaltbild einer Datenübertragungsverbindung zwischen einem ersten Endgerät innerhalb eines ersten Sicherheitsbereichs und einem zweiten Endgerät innerhalb eines zweiten Sicherheitsbereichs, unter Anwendung des Verfahrens gemäß der vorliegenden Erfindung;
- Fig. 3: ein Flußdiagramm, in dem die wesentlichen Schritte des erfindungsgemäßen Verfahrens dargestellt sind;
- Fig. 4: ein Flußdiagramm eines abgewandelten Verfahrens, bei dem ein Protokoll erstellt wird;
- Fig. 5: ein Flußdiagramm eines weiterhin abgewandelten Verfahrens, bei dem Sicherheitsmerkmale verwendet werden, die dem HBCI-Standard entsprechen.

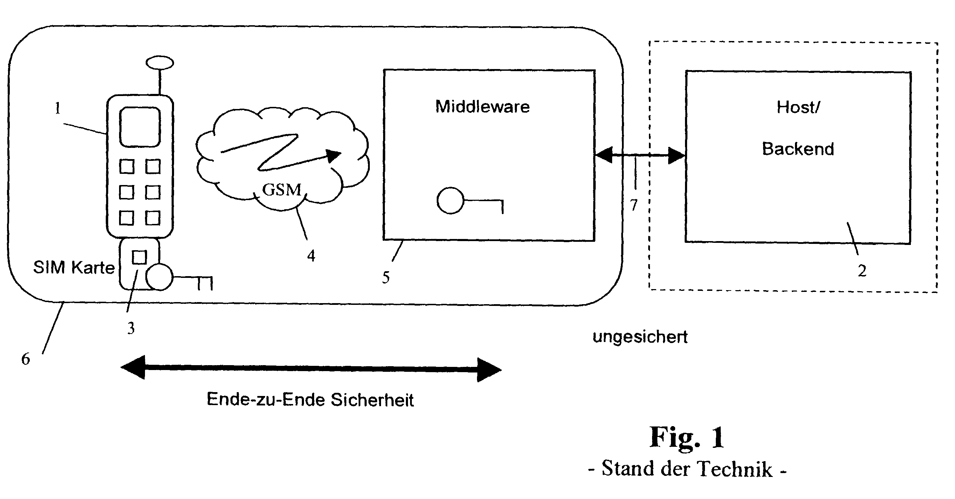

In Fig. 1 ist in einem Blockschaltbild der prinzipielle Aufbau einer Datenübertragungsverbindung gezeigt, wie er aus dem Stand der Technik bekannt ist, dabei werden in einem ersten Endgerät 1 Nutzdaten erzeugt. Im dargestellten Beispiel ist das erste Endgerät 1 ein Funktelefon. Die Nutzdaten sollen zu einem zweiten Endgerät 2 übertragen werden. Für den Fall, daß vom Benutzer des ersten Endgeräts 1 beispielsweise eine Banküberweisung direkt unter Benutzung eines Funktelefons ausgelöst werden soll, müssen entsprechende Nutzdaten im Funktelefon erzeugt werden, beispielsweise über eine Tastatureingabe, und an einen geeigneten Rechner (Host/Backend), der das zweite Endgerät 2 darstellt, in dem ausgewählten Bankinstitut übertragen werden. Im dargestellten Beispiel werden die Nutzdaten im ersten Endgerät 1 mit Sicherheitsmerkmalen versehen, beispielsweise durch Anbringen einer digitalen Signatur, die auf einer SIM-Karte 3 erzeugt wird. Die dadurch geschützten Daten werden über eine erste Kommunikationsverbindung 4, beispielsweise ein GSM-Netz, zu einer Empfangsstation 5 übertragen. Die Empfangsstation 5, z.B. ein Telekommunikationsserver ist in der Lage, die Sicherheitsmerkmale, in diesem Fall die digitale Signatur, der geschützten Daten zu überprüfen. Dadurch ist ein erster Sicherheitsbereich 6 ausgebildet, der das erste Endgerät 1, den Telekommunikationsserver 5 und die zwischenliegende erste Kommunikationsverbindung 4 umfaßt. Werden geeignete Sicherheitsmerkmale verwendet, wie in diesem Beispiel die digitale Signatur, ergibt sich eine Ende-zu-Ende Sicherheit innerhalb des ersten Sicherheitsbereichs 6. Die Weiterleitung der ungeschützten Nutzdaten zu dem zweiten Endgerät 2 (beispielsweise ein Host/Backend System) ist unkritisch, wenn diese innerhalb eines nicht-öffentlichen Datennetzes (z.B. innerhalb eines Bankinstituts) über eine zweite Kommunikationsverbindung 7 erfolgt. Eine weitere Datenübertragung in ungesicherter Form über ein öffentliches Fernmeldenetz kann aus Sicherheitsgründen nicht erfolgen.

Ein weiterer Nachteil des gezeigten Standes der Technik besteht darin, daß die nachgeordnete Datenverarbeitungseinheit 2 für den Zweck der Anbindung des Telekommunikationsservers 5 eine separate Schnittstelle zur Verfügung stellen muß, während sie über eine Reihe von gesicherten Schnittstellen verfügt, die im jeweiligen Umfeld einen Quasi-Standard darstellen, durch den Telekommunikationsserver aber nicht nutzbar sind. So stellen Bankinstitute gewöhnlich verschiedene, ihrem Datenverarbeitungssystem vorgeschaltete Zugänge für Endgeräte (wie eine HBCI-Schnittstelle) bereit, die diverse Sicherheitsmerkmale besitzen.

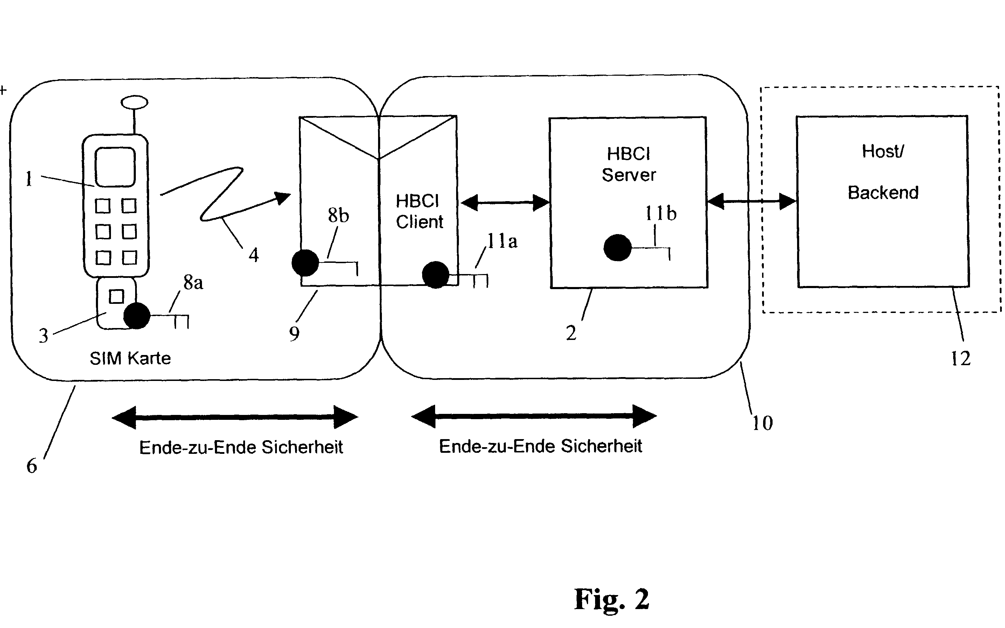

Fig. 2 zeigt ein Blockschaltbild einer Datenübertragungsverbindung, wobei das Verfahren gemäß der vorliegenden Erfindung zum Einsatz kommt. In dem ersten Endgerät 1 werden wiederum Nutzdaten erzeugt. Im gezeigten Beispiel werden die Nutzdaten mit Hilfe der SIM-Karte 3 im Funktelefon 1 mit Sicherheitsmerkmalen verknüpft. Dazu wird hier ein erster privater Schlüssel 8a verwendet, der auf der SIM-Karte 3 vorliegt. Die geschützten Daten werden in herkömmlicher Weise über die erste Kommunikationsverbindung 4 übertragen. Mitglied des ersten Sicherheitsbereichs 6 ist weiterhin ein Bereichstransformator 9, der die geschützten Daten vom ersten Endgerät 1 empfängt. Der Bereichstransformator 9 ist gleichzeitig Mitglied eines zweiten Sicherheitsbereichs 10, in welchem zweite Sicherheitsmerkmale verwendet werden, die sich von den ersten Sicherheitsmerkmalen des ersten Sicherheitsbereichs 6 unterscheiden. Im dargestellten Beispiel entspricht der zweite Sicherheitsbereich 10 einem HBCI-System, wobei der Bereichstransformator 9 die Funktion des HBCI-Client übernimmt. Der Bereichstransformator 9 führt die Transformation der ersten Sicherheitsmerkmale in die zweiten Sicherheitsmerkmale aus, wobei er bei einer bevorzugten Ausführungsform einen ersten öffentlichen Schlüssel 8b verwendet, der dem ersten privaten Schlüssel 8a zugeordnet ist, und einen zweiten privaten Schlüssel 11a, dessen zugeordneter zweiter öffentlicher Schlüssel 11b in dem zweiten Endgerät 2 zur Entschlüsselung der geschützten Daten verwendet wird. Das zweite Endgerät 2 ist Mitglied des zweiten Sicherheitsbereichs 10 und wird im dargestellten Beispiel durch einen HBCI-Server gebildet. Im zweiten Endgerät 2 werden die mit den zweiten Sicherheitsmerkmalen geschützten Daten in die Nutzdaten zurück gewandelt. Auf diese Weise besteht eine mittelbare Ende-zu-Ende Sicherheit zwischen dem ersten Endgerät 1 und dem zweiten Endgerät 2. Die Weiterleitung der ungeschützten Nutzdaten vom zweiten Endgerät 2 zu einer nachgeordneten Datenverarbeitungseinheit 12 (beispielsweise ein Host/Backend System) ist unkritisch, da diese nicht über ein öffentliches Datennetz, sondern beispielsweise innerhalb eines Bankinstituts vorgenommen wird.

Der Bereichstransformator kann durch eine Datensatztabelle gebildet sein, die in einem geeigneten Speichermedium abgelegt ist und in der jedem benötigten Sicherheitsmerkmal des ersten Sicherheitsbereichs ein Sicherheitsmerkmal des zweiten Sicherheitsbereich zugeordnet ist. Die Funktion des Bereichstransformators kann aber auch als eine geeignete Softwarestruktur realisiert werden, die von einem Prozessor abgearbeitet wird.

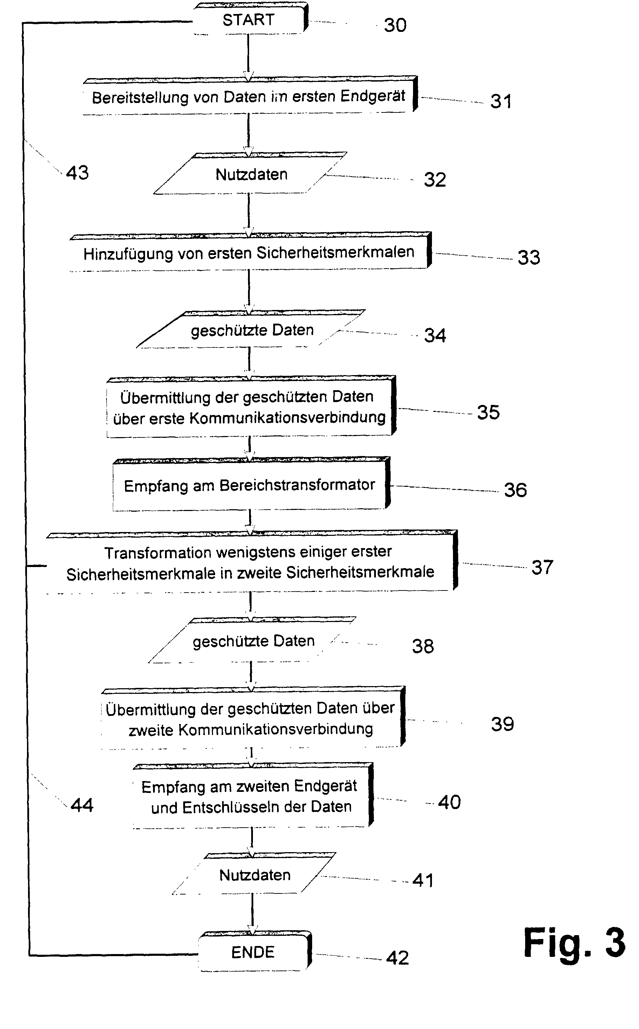

Fig. 3 zeigt ein Flußdiagramm des erfindungsgemäßen Verfahrens. Das Verfahren zur gesicherten Übermittlung von geschützten Daten startet im Schritt 30. Im Schritt 31 werden im ersten Endgerät die gewünschten Daten bereitgestellt. Dies geschieht beispielsweise durch die Dateneingabe über eine Tastatur des ersten Endgeräts. Demzufolge liegen im Schritt 32 die gewünschten Nutzdaten für eine Übermittlung bereit. Um entsprechende Sicherheitsanforderungen zu erfüllen werden den Nutzdaten im Schritt 33 erste Sicherheitsmerkmale hinzugefügt. Diese ersten Sicherheitsmerkmale sind charakteristisch für den ersten Sicherheitsbereich. Im Ergebnis dessen liegen im Schritt 34 geschützte Daten vor. Dabei kann es sich beispielsweise um vollständig verschlüsselte Daten handeln oder die Daten sind mit einer digitalen Signatur versehen, um deren Echtheit zu verifizieren und unbemerkte Änderungen auszuschließen. Über eine erst Kommunikationsverbindung erfolgt im Schritt 35 die Übermittlung der geschützten Daten. Als Kommunikationsverbindung kann ein Funknetz, ein drahtgebundenes Nachrichtenübertragungsnetz oder dergleichen dienen. Die geschützten Daten werden im Schritt 36 von dem Bereichstransformator empfangen. Der Bereichstransformator führt im Schritt 37 eine Transformation wenigstens einiger der ersten Sicherheitsmerkmale in zweite Sicherheitsmerkmale aus. Die zweiten Sicherheitsmerkmale sind gemäß den Anforderungen des zweiten Sicherheitsbereichs definiert. Im Schritt 38 liegen somit wieder geschützte Daten vor, wobei der Schutz der Daten nunmehr über die zweiten Sicherheitsmerkmale realisiert ist. Auf einer zweiten Kommunikationsverbindung werden die geschützten Daten im Schritt 39 wiederum übermittelt, so daß sie im Schritt 40 im zweiten Endgerät empfangen und dort entschlüsselt werden können. Im Schritt 41 liegen damit wiederum die Nutzdaten vor. Das Verfahren endet im Schritt 42. In der Fig. 3 ist durch die Klammer 43 der erste Sicherheitsbereich symbolisiert, während die Klammer 44 den zweiten Sicherheitsbereich anzeigt. Es ist auch hier erkennbar, daß während der gesamten Datenübertragung eine mittelbare Ende-zu-Ende Sicherheit vorliegt, da die beiden Sicherheitsbereiche unmittelbar aneinander angrenzen. Durch die Integration des Bereichstransformators ist es möglich, das Endgeräte bzw. Mitglieder des ersten Sicherheitsbereichs auch in dem zweiten Sicherheitsbereich agieren können.

Es ist offensichtlich, und bedarf keiner weiteren Erläuterung, daß das dargestellte Verfahren auch bidirektional ausgeführt werden kann, so daß eine bidirektionale Datenübertragung zwischen dem ersten Endgerät und dem zweiten Endgerät möglich ist. Dafür ist es lediglich erforderlich, daß der Bereichstransformator auch die zweiten Sicherheitsmerkmale in die ersten Sicherheitsmerkmale überführen kann.

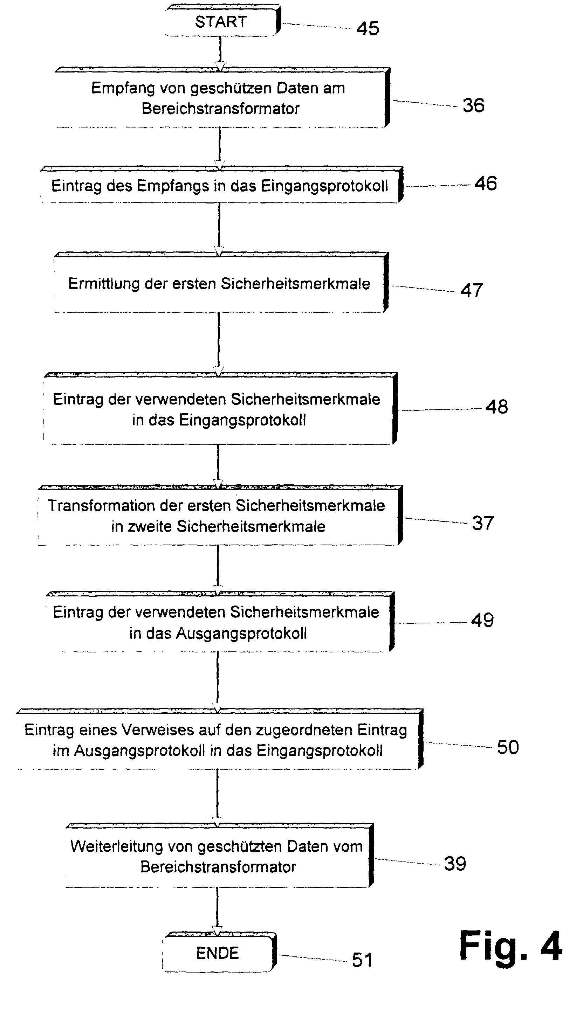

Fig. 4 zeigt ein Flußdiagramm einer abgewandelten Ausführungsform des Verfahrens, wobei nur die durch den Bereichstransformator auszuführenden Schritte betroffen sind und die übrigen Verfahrensschritte, die im Zusammenhang mit Fig. 3 beschrieben wurden, unverändert sind. Ziel der Abwandlung bzw. der Ergänzung von Zwischenschritten ist es, die sicherheitsrelevanten Tätigkeiten des Bereichstransformators zu protokollieren, um gegenüber den Mitgliedern der beteiligten Sicherheitsbereiche den Nachweis der ordnungsgemäßen Arbeitsweise erbringen zu können. Eine solche Protokollierung kann auf verschiedene Weisen erfolgen, wobei in Fig. 4 lediglich ein mögliches Beispiel gezeigt ist.

Der entsprechende Verfahrensabschnitt startet im Schritt 45. Wie bereits im Zusammenhang mit Fig. 3 erläutert wurde, empfängt der Bereichstransformator im Schritt 36 geschützte Daten. Im Schritt 46 generiert der Bereichstransformator einen Eintrag in einem Eingangsprotokoll, mit welchem der Datenempfang protokolliert wird. Anschließend werden im Schritt 47 die ersten Sicherheitsmerkmale der empfangenen geschützten Daten ermittelt. Bei Bedarf kann im Schritt 48 auch ein weiterer Eintrag in das Eingangsprotokoll erfolgen, der die verwendeten Sicherheitsmerkmale oder zumindest Teile von diesen enthält. Bei einer Revision kann dann gegenüber dem Verwender dieser Sicherheitsmerkmale nachgewiesen werden, in welchem Zustand die geschützten Daten den Bereichstransformator erreicht haben. Dann schließt sich der bereits genannte Schritt 37 an, in dem die ersten Sicherheitsmerkmale in zweite Sicherheitsmerkmale transformiert werden. Um die ordnungsgemäße Transformation und die Weiterleitung an den Empfänger zu dokumentieren werden im Schritt 49 die verwendeten, zweiten Sicherheitsmerkmale in das Ausgangsprotokoll eingetragen. Eine eindeutige Beziehung zwischen Eingangsprotokoll und Ausgangsprotokoll kann durch zusätzlichen Eintrag eines Verweises auf den jeweils zugeordneten Eintrag des Ausgangsprotokolls in das Eingangsprotokoll erfolgen, was im Schritt 50 durchgeführt wird. Bei einer abgewandelten Ausführungsform kann der Querverweis auch im Ausgangsprotokoll eingetragen werden. Daran schließt sich der bereits erläuterte Schritt 39 an, in dem die geschützten Daten vom Bereichstransformator an das zweite Endgerät weitergeleitet werden. Dieser Verfahrensabschnitt endet im Schritt 51.

Wenn ein entsprechendes Berichtswesen nicht gewünscht ist, kann auf die beschriebene Protokollierung verzichtet werden. Dies ist z.B. möglich, wenn der Hersteller und der Betreiber des Bereichstransformators von allen beteiligten Benutzern als ausreichend vertrauenswürdig angesehen wird (sogenannte Trusted Third Party). Es ist auch möglich, den Bereichstransformator physikalisch einem Sicherheitsbereich zuzuordnen, wenn sich dieser gegenüber Mitgliedern des anderen Sicherheitsbereichs einseitig schützen will. Die Verwendung des Bereichstransformator bietet dann zusätzlich den Vorteil, daß dieser als Kontrollpunkt für den Zugang zu dem jeweiligen Sicherheitsbereich dient. Wenn nur einzelnen Mitgliedern des einen Sicherheitsbereichs Merkmale zugeordnet sind, die einen Zugang über den Bereichstransformator zu dem anderen Sicherheitsbereich ermöglichen, können auf diese Weise diejenigen Mitglieder des ersten Sicherheitsbereiches selektiert werden, die im zweiten Sicherheitsbereich agieren dürfen.

Es sind auch Anwendungsfälle möglich, bei denen einzelne Sicherheitsmerkmale des ersten Sicherheitsbereichs im zweiten Sicherheitsbereich keine Entsprechung finden. Es kann dann vom Bereichstransformator eine Protokollierung der verwendeten Sicherheitsmerkmale vorgenommen werden, um das Vorhandensein einzelner Sicherheitsmerkmale zumindest im ersten Abschnitt der Datenübertragung nachzuweisen. Andererseits können vom Bereichstransformator für eine bestimmte Gruppe von Mitgliedern eines ersten Sicherheitsbereichs zusätzliche Sicherheitsmerkmale generiert werden, die im zweiten Sicherheitsbereich benötigt werden, jedoch im ersten Sicherheitsbereich nicht zur Verfügung stehen.

Sofern eine Protokollierung gewünscht ist, kann dies wie in Bezug auf Fig. 4 beschrieben in getrennten Eingangs- und Ausgangsprotokollen erfolgen. Die beiden Protokolle können physisch in einem gemeinsamen Protokoll abgelegt werden. Bei geringeren Sicherheitsanforderungen ist es ggf. ausreichend, nur ein einziges Protokoll aufzuzeichnen. Bei sehr hohen Sicherheitsanforderungen können die Einträge in den Protokollen mit zusätzlichen Merkmalen versehen werden, die eine Verfälschung des Protokolls verhindern. Beispielsweise können den Einträgen in den Protokollen eindeutige Zeitstempel zugeordnet werden. Ebenso ist es möglich, das Protokoll auf einem nur einmal beschreibbarem Medium zu speichern, um nachträgliche Veränderungen zu verhindern. Bei Bedarf können die Protokolleinträge beispielsweise von einer Zertifizierungsstelle beglaubigt und/oder zusätzlich verschlüsselt werden. Die Protokollierung kann auch vollständig im Verantwortungsbereich eines von allen Mitgliedern anerkannten, vertrauenswürdigen Dritten (in der Funktion eines "Notars") durchgeführt werden.

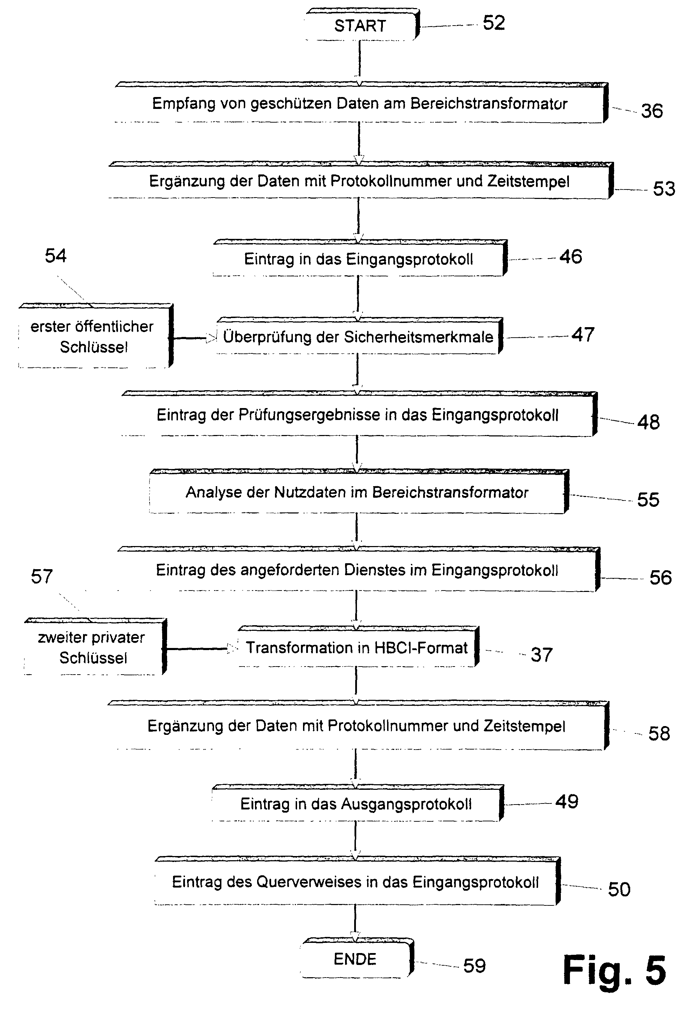

Fig. 5 stellt in einem Flußdiagramm einzelne Verfahrensschritte einer speziellen Ausführungsform dar. Als Beispiel wird angenommen, daß der erste Sicherheitsbereich eine Vielzahl von Funktelefonen umfaßt, die mit Hilfe einer SIM-Karte ein Sicherheitssystem mit digitalen Signaturen nutzen können. Der zweite Sicherheitsbereich wird als HBCI-System einer Bank angenommen, wobei die berechtigten Kunden der Bank mit HBCIfähigen Geräten (beispielsweise einem Personalcomputer mit entsprechender Software) elektronische Bankdienstleistungen, wie Überweisungen oder Kontostandsabfragen in Anspruch nehmen können. Das HBCI-System benutzt zur Sicherung der Daten unter anderem die Sicherheitsmerkmale digitale Signatur und Doppeleinreichungskontrolle. Die in den beiden Sicherheitsbereichen verwendeten Signatursysteme und die Datenformate sind untereinander unverträglich, bieten jedoch dieselbe Sicherheitsqualität.

Der in Fig. 5 dargestellte Abschnitt des Verfahrens startet im Schritt 52. Wie bereits erläutert wurde, werden im Schritt 36 die geschützten Daten am Bereichstransformator empfangen. Wenn beispielsweise von dem Benutzer der aktuelle Kontostand abgefragt werden soll, enthalten die geschützten Daten als Nutzdaten ein Kennzeichen, welches die gewünschte Kontostandsabfrage symbolisiert, sowie zumindest die Kontonummer. Diese Daten werden durch die Verwendung der digitalen Signatur autorisiert, wobei das im ersten Sicherheitsbereich gültige Datenformat angewendet wird. Im Schritt 53 werden die Daten mit einer Protokollnummer und/oder einem Zeitstempel ergänzt. Es folgt der Schritt 46, in dem die entsprechenden Einträge in das Eingangsprotokoll vorgenommen werden. Im Schritt 47 erfolgt wiederum die Überprüfung der ersten Sicherheitsmerkmale, wobei dazu ein erster öffentlicher Schlüssel verwendet wird, der im Schritt 54 bereitgestellt wird. Der erste öffentliche Schlüssel korrespondiert mit dem ersten privaten Schlüssel, der im ersten Endgerät verwendet wurde, um die Nutzdaten mit der digitalen Signatur zu versehen. Die verwendeten Sicherheitsmerkmale bzw. die Prüfungsergebnisse für die Gültigkeit dieser Sicherheitsmerkmale werden im Schritt 48 in das Eingangsprotokoll eingetragen. Um die gewünschte Kontostandsabfrage durchzuführen, muß der Bereichstransformator in diesem Fall im Schritt 55 die Nutzdaten analysieren, damit der gewünschte Dienst bereitgestellt werden kann. Sofern es zur Dokumentation gewünscht ist, auch die Inhalte der vom Bereichstransformator durchgeführten Tätigkeiten zu protokollieren, wird im Schritt 56 der jeweils angeforderte Dienst im Eingangsprotokoll eingetragen. Die eigentliche Transformation der Sicherheitsmerkmale erfolgt wiederum im Schritt 37. Im vorliegenden Fall wird ein zweiter privater Schlüssel angewendet, um die Nutzdaten mit einer digitalen Signatur zu versehen. Das Format entspricht hier dem standardisierten HBCI-Format. Der zweite private Schlüssel wird im Schritt 57 bereitgestellt, wobei dieser private Schlüssel dem speziellen ersten Endgerät zugeordnet ist und vom Bereichstransformator verwaltet wird. In einer abgewandelten Ausführungsform kann der zweite private Schlüssel für eine Gruppe von Endgeräten oder alle Endgeräte des ersten Sicherheitsbereichs gleich sein und als eine Art Generalschlüssel fungieren, der im zweiten Sicherheitsbereich gültig ist. Die Zuordnung zu einem speziellen ersten Endgerät erfolgt dann im zweiten Endgerät aufgrund anderer Merkmale, die in den Daten enthalten sind. Bei Bedarf werden innerhalb des Schrittes 37 auch die Nutzdaten an das notwendige Format angepaßt, welches im zweiten Sicherheitsbereich benötigt wird. Im Schritt 58 werden die transformierten Daten mit einer Protokollnummer und/oder einem Zeitstempel versehen, so daß im Schritt 49 wiederum die entsprechenden Einträge im Ausgangsprotokoll vorgenommen werden können. Auch in diesem Fall ist es möglich, im Schritt 50 einen Querverweis in das Eingangsprotokoll einzutragen, um eine eineindeutige Kopplung zwischen Eingangs- und Ausgangsprotokoll zu erreichen. Das Verfahren endet im Schritt 59.

Die beschriebene Erfindung ist nicht auf die speziell dargestellten Ausführungsbeispiele beschränkt. Andere Anwendungsbereiche sind auch bei Zugangskontrollsystemen vorstellbar, wenn zu Autorisierungszwecken auch systemfremde Geräte zugelassen werden sollen.

Allgemein ist es mit dem erfindungsgemäßen Verfahren möglich, Mitgliedern eines ersten Sicherheitsbereichs, die erste Sicherheitsmerkmale anwenden können, den Zugang zu anderen Sicherheitsbereichen zu ermöglichen, in denen abweichende Sicherheitsmerkmale verwendet werden. Die Zugangserweiterungen können ohne weiteres bidirektional ausgelegt sein.

## Patentansprüche

1. Verfahren zur gesicherten Übermittlung von geschützten Daten von einem ersten Endgerät (1) innerhalb eines ersten Sicherheitsbereichs (6) zu einem zweiten Endgerät (2) innerhalb eines zweiten Sicherheitsbereichs (10), der von dem ersten Sicherheitsbereich verschieden ist, wobei in den beiden Sicherheitsbereichen unterschiedliche Sicherheitsmerkmale zur Anwendung kommen, die folgenden Schritte umfassend:
• Bereitstellung (31) von Nutzdaten (32) in dem ersten Endgerät;
• Erzeugung (33) der geschützten Daten (34) in dem ersten Endgerät durch Hinzufügung von ersten Sicherheitsmerkmalen (8a), die für den ersten Sicherheitsbereich repräsentativ sind, zu den Nutzdaten, wobei diese ersten Sicherheitsmerkmale (8a) mindestens ein Berechtigungsmerkmal enthalten, welches die Zugangsberechtigung zum zweiten Sicherheitsbereich (10) bestimmt;
• Übermittlung (35) der mit den ersten Sicherheitsmerkmalen geschützten Daten innerhalb des ersten Sicherheitsbereichs über eine erste sichere Kommunikationsverbindung (4) an einen Bereichstransformator (9), der sowohl in den ersten als auch in den zweiten Sicherheitsbereich integriert ist;
• Überprüfung der in den empfangenen Daten enthaltenen ersten Sicherheitsmerkmalen durch den Bereichstransformator;
• Entscheidung durch den Bereichstransformator, ob eine Transformation der ersten Sicherheitsmerkmale in die zweiten Sicherheitsmerkmale durchgeführt wird oder nicht, wenn die ersten Sicherheitsmerkmale mindestens ein Berechtigungsmerkmal enthalten;
• Transformation (37) der ersten Sicherheitsmerkmale in zweite Sicherheitsmerkmale (11a), die für den zweiten Sicherheitsbereich repräsentativ sind, durch den Bereichstransformator, wobei sich die zweiten Sicherheitsmerkmale wenigstens teilweise nicht nur hinsichtlich des Formats von den ersten Sicherheitsmerkmalen unterscheiden und wobei der Bereichstransformator zusätzliche zweite Sicherheitsmerkmale erzeugt, die keine unmittelbare Entsprechung in den ersten Sicherheitsmerkmalen haben, wenn solche im zweiten Sicherheitsbereich benötigt werden;
• Übermittlung (39) der mit den zweiten Sicherheitsmerkmalen geschützten Daten innerhalb des zweiten Sicherheitsbereichs über eine zweite sichere Kommunikationsverbindung (7) an das zweite Endgerät, wo die geschützten Daten in die Nutzdaten zurück gewandelt werden können.

2. Verfahren nach Anspruch 1, **dadurch gekennzeichnet, daß** der Schritt der Transformation der Sicherheitsmerkmale im Bereichstransformator folgende Teilschritte umfaßt:
• Analyse (55) der Nutzdaten zur Erkennung eines angeforderten Dienstes;
• gegebenenfalls Anpassung des Formats der Nutzdaten an den zweiten Sicherheitsbereich.

3. Verfahren nach Anspruch 1 oder 2, **dadurch gekennzeichnet, daß** vom Bereichstransformator ein Protokoll der Durchführung eines oder mehrerer der folgenden Schritte aufgezeichnet wird:
• Empfang (36) von geschützten Daten aus dem ersten Sicherheitsbereich,
• Transformation (37) von geschützten Daten,
• Übermittlung (39) von geschützten Daten in den zweiten Sicherheitsbereich.

4. Verfahren nach Anspruch 3, **dadurch gekennzeichnet, daß** bei der Aufzeichnung des Protokolls jedem Protokolleintrag mindestens ein diesen Protokolleintrag eindeutig kennzeichnendes Protokollmerkmal, beispielsweise ein Zeitstempel, hinzugefügt wird.

5. Verfahren nach einem der Ansprüche 1 bis 4, **dadurch gekennzeichnet, daß** die Hinzufügung der ersten Sicherheitsmerkmale im ersten Endgerät eine Hinzufügung einer digitalen Signatur (8a) zu den Nutzdaten ist.

6. Verfahren nach Anspruch 5, **dadurch gekennzeichnet, daß** die digitale Signatur aus einer im ersten Endgerät eingesetzten SIM-Karte (3) (SIM = Subscriber Identity Module) ausgelesen und den Nutzdaten hinzugefügt wird.

7. Verfahren nach Anspruch 5, **dadurch gekennzeichnet, daß** die digitale Signatur mit Hilfe eines WAP-Identifikations-Moduls (WIM) bereitgestellt wird (WAP = Wireless Access Protocol).

8. Verfahren nach einem der Ansprüche 1 bis 7, **dadurch gekennzeichnet, daß** das erste Endgerät ein mobiles Datenübertragungsgerät (1) und die erste Kommunikationsverbindung eine Funkverbindung (4) ist.

9. Verfahren nach Anspruch 8, **dadurch gekennzeichnet, daß** das erste Endgerät ein Funktelefon (1) ist und die erste Kommunikationsverbindung über ein GSM-Netz (4) (GSM = Global System for Mobile communications) hergestellt wird.

10. Verfahren nach einem der Ansprüche 1 bis 9, **dadurch gekennzeichnet, daß** die zweiten Sicherheitsmerkmale an den HBCI-Standard (HBCI = Home Banking Computer Interface) angepaßt sind und der zweite Sicherheitsbereich ein HBCI-System ist.

11. Verfahren nach einem der Ansprüche 1 bis 10, **dadurch gekennzeichnet, daß** zusätzlich eine Transformation der zweiten Sicherheitsmerkmale in die ersten Sicherheitsmerkmale erfolgt, wenn Daten vom zweiten Endgerät zum ersten Endgerät übertragen werden.

## Claims

1. A method for securely transmitting protected data from a first terminal (1) within a first security domain (6) to a second terminal (2) within a second security domain (10) that differs from the first security domain, wherein different security features are employed in the two security domains, and wherein said method comprises the following steps:
- providing (31) user data (32) in the first terminal;
- generating (33) the protected data (34) in the first terminal by appending first security features (8a) that are representative of the first security domain to the user data, wherein these first security features (8a) comprise at least one authorization feature that defines the access authorization to the second security domain (10);
- transmitting (35) the data protected with the first security features within the first security domain to a domain transformer (9) that is integrated into the first as well as into the second security domain via a first secure communications link (4);
- checking the first security features contained in the received data by means of the domain transformer;
- deciding with the aid of the domain transformer whether a transformation of the first security features into second security features should be carried out or not if the first security features contain at least one authorization feature;
- transforming (37) the first security features into second security features (11a) that are representative of the second security domain by means of the domain transformer, wherein at least part of the second security features not only differs from the first security features with respect to the format, and wherein the domain transformer generates additional second security features that do not directly correspond to the first security features if such second security features are required in the second security domain, and
- transmitting (39) the data protected with the second security features within the second security domain to the second terminal, in which the user data can be regenerated from the protected data, via a second secure communications link (7).

2. The method according to Claim 1, **characterized in that** the step of transforming the security features in the domain transformer comprises the following partial steps:
- analysing (55) the user data in order to determine the requested service, and,
- if so required, adapting the format of the user data to the second security domain.

3. The method according to Claim 1 or 2, **characterized in that** the domain transformer records a protocol on the execution of one or more of the following steps:
- reception (36) of protected data from the first security domain,
- transformation (37) of protected data, and
- transmission (39) of protected data to the second security domain.

4. The method according to Claim 3, **characterized in that** at least one protocol feature, for example, a time stamp, is appended to each protocol entry during the recording of the protocol, wherein the at least one protocol feature unmistakably identifies the respective protocol entry.

5. The method according to one of Claims 1 to 4, **characterized in that** the appending of the first security features in the first terminal consists of appending a digital signature (8a) to the user data.

6. The method according to Claim 5, **characterized in that** the digital signature is read out from a SIM card (3) used in the first terminal and appended to the user data (SIM = Subscriber Identity Module).

7. The method according to Claim 5, **characterized in that** a WAP identification module (WIM) is used for making available the digital signature (WAP = Wireless Access Protocol).

8. The method according to one of Claims 1 to 7, **characterized in that** the first terminal consists of a mobile data transmission unit (1), and **in that** the first communications link consists of a radio link (4).

9. The method according to Claim 8, **characterized in that** the first terminal consists of a radiotelephone (1), and **in that** a GSM network (4) is used for establishing the first communications link (GSM = Global System for Mobile communications).

10. The method according to one of Claims 1 to 9, **characterized in that** the second security features are adapted to the HBCI standard (HBCI = Home Banking Computer Interface), and **in that** the second security domain consists of a HBCI system.

11. The method according to one of Claims 1 to 10, **characterized in that** the second security features are additionally transformed into the first security features if data is transmitted from the second terminal to the first terminal.

## Revendications

1. Procédé pour la transmission sécurisée de données protégées depuis un premier terminal (1) situé dans un premier domaine sécurisé (6) vers un deuxième terminal (2) situé dans un deuxième domaine sécurisé (10) différent du premier domaine sécurisé, les deux domaines sécurisés faisant appel à des caractéristiques de sécurité différentes, comportant les étapes suivantes :
• Mise à disposition (31) de données utiles (32) dans le premier terminal;
• Génération (33) des données protégées (34) dans le premier terminal par ajout aux données utiles de premiers attributs de sécurité (8a) représentatifs du premier domaine sécurisé, ces premiers attributs de sécurité (8a) contenant au moins un attribut de notarisation définissant le droit d'accès au deuxième domaine sécurisé (10);
• Transmission (35) des données protégées par les premiers attributs de sécurité à l'intérieur du premier domaine sécurisé par l'intermédiaire d'une première liaison de communication sécurisée (4) vers un transformateur de domaine (9) intégré aussi bien dans le premier que dans le deuxième domaine sécurisé;
• Vérification par le transformateur de domaine des premiers attributs de sécurité contenus dans les données reçues;
• Décision, par le transformateur de domaine, si les premiers attributs de sécurité doivent être transformés dans les deuxièmes attributs de sécurité ou non, si les premiers attributs de sécurité contiennent au moins un attribut de notarisation;
• Transformation (37) par le transformateur de domaine des premiers attributs de sécurité en deuxièmes attributs de sécurité (11a) représentatifs du deuxième domaine sécurisé, ces deuxièmes attributs de sécurité différant des premiers attributs de sécurité au moins partiellement et non uniquement du point de vue du format, le transformateur de domaine générant des deuxièmes attributs de sécurité supplémentaires sans correspondance directe dans les premiers attributs de sécurité, si ces attributs sont nécessaires dans le deuxième domaine sécurisé;
• Transmission (39) des données protégées par les deuxièmes attributs de sécurité à l'intérieur du deuxième domaine sécurisé par l'intermédiaire d'une deuxième liaison de communication sécurisée (7) vers le deuxième terminal, où les données protégées peuvent être reconverties en données utiles.

2. Procédé selon la revendication 1, **caractérisé en ce que** l'étape de la transformation des attributs de sécurité dans le transformateur de domaine comprend les étapes suivantes :
• Analyse (55) des données utiles dans le but de reconnaître une fonction demandée;
• Le cas échéant, adaptation du format des données utiles au deuxième domaine sécurisé.

3. Procédé selon la revendication 1 ou 2, **caractérisé en ce que** le transformateur de domaine enregistre un compte-rendu de l'exécution d'une ou de plusieurs des étapes suivantes :
• Réception (36) de données protégées depuis le premier domaine sécurisé,
• Transformation (37) de données protégées,
• Transmission (39) de données protégées vers le deuxième domaine sécurisé.

4. Procédé selon la revendication 3, **caractérisé en ce que**, lors de l'enregistrement du compte-rendu, chaque entrée du compte-rendu se voit affecter au moins un attribut de compte-rendu univoque, par exemple une estampille, caractérisant cette entrée du compte-rendu.

5. Procédé selon l'une des revendications 1 à 4, **caractérisé en ce que** l'ajout des premiers attributs de sécurité dans le premier terminal consiste en l'ajout d'une signature numérique (8a) aux données utiles.

6. Procédé selon la revendication 5, **caractérisé en ce que** la signature numérique est lue sur une carte SIM (3) (SIM = Subscriber Identity Module) insérée dans le premier terminal et est ajoutée aux données utiles.

7. Procédé selon la revendication 5, **caractérisé en ce que** la signature numérique est fournie à l'aide d'un module d'identification WAP (WIM) (WAP = Wireless Access Protocol).

8. Procédé selon l'une des revendications 1 à 7, **caractérisé en ce que** le premier terminal est un appareil de transmission de données mobile (1) et **en ce que** la première liaison de communication est une liaison radio (4).

9. Procédé selon la revendication 8, **caractérisé en ce que** le premier terminal est un radiotéléphone (1) et **en ce que** la première liaison de communication est établie par l'intermédiaire d'un réseau GSM (4) (GSM = Global System for Mobile communications).

10. Procédé selon l'une des revendications 1 à 9, **caractérisé en ce que** les deuxièmes attributs de sécurité sont adaptés à la norme HBCI (HBCI = Home Banking Computer Interface) et **en ce que** le deuxième domaine sécurisé est un système HBCI.

11. Procédé selon l'une des revendications 1 à 10, **caractérisé en ce que**, en plus, les deuxièmes attributs de sécurité sont transformés en les premiers attributs de sécurité lorsque des données sont transmises du deuxième terminal vers le premier terminal.
